(19) Europäisches Patentamt / European Patent Office / Office européen des brevets

(11) **EP 2 020 127 B1**

(12) **FASCICULE DE BREVET EUROPEEN**

(45) Date de publication et mention
de la délivrance du brevet:
**07.12.2016 Bulletin 2016/49**

(21) Numéro de dépôt: **07766063.7**

(22) Date de dépôt: **16.05.2007**

(51) Int Cl.:
**H04L 12/721** *(2013.01)*    **H04L 12/727** *(2013.01)*

(86) Numéro de dépôt international:
**PCT/FR2007/051289**

(87) Numéro de publication internationale:
**WO 2007/135325 (29.11.2007 Gazette 2007/48)**

(54) **REPRESENTATION D'UN CHEMIN DE RETARD DANS DES RESEAUX MOBILES**

DARSTELLUNG EINES VERZÖGERUNGSPFADES IN MOBILEN NETZWERKEN

REPRESENTATION OF A DELAY PATH IN MOBILE NETWORKS

(84) Etats contractants désignés:
**DE FR GB**

(30) Priorité: **22.05.2006 FR 0604581**

(43) Date de publication de la demande:
**04.02.2009 Bulletin 2009/06**

(73) Titulaire: **Thomson Licensing**
**92130 Issy-les-Moulineaux (FR)**

(72) Inventeur: **CHAINTREAU, Augustin**
**F-75010 Paris (FR)**

(74) Mandataire: **Huchet, Anne et al**
**TECHNICOLOR**
**1-5, rue Jeanne d'Arc**
**92130 Issy-les-Moulineaux (FR)**

(56) Documents cités:
**US-A- 5 412 654        US-A1- 2002 101 869**
**US-A1- 2004 156 345    US-A1- 2006 007 863**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

Domaine de l'invention

La présente invention se rapporte au domaine des réseaux sans-fil.
La présente invention se rapporte plus particulièrement à un dispositif de communication et à un procédé de communication entre différents dispositifs.

Etat de la technique

La présente invention s'inscrit dans le contexte des réseaux, par exemple de type ad-hoc sans-fil ou PAN (*Personal Area Networks*), notamment Bluetooth. Le réseau est représenté comme un graphe, dans lequel un terminal mobile est un noeud (sommet) du graphe, identifié par exemple par une adresse MAC, dans lequel les arcs correspondent à des contacts entre paires de terminaux, et dans lequel un chemin est une suite d'arcs ordonnées de façon chronologique. Parmi tous les chemins possibles, l'un est considéré comme optimal si, partant d'une source à un instant donné, il atteint la destination à la date d'arrivée le plus tôt possible. Pour chaque paire (source, destination), la fonction d'arrivée donne, à chaque instant, l'instant d'arrivée le plus tôt pour un paquet créé. Une solution « naïve » consisterait à représenter les retards observés dans le temps par une valeur à chaque instant. Un algorithme de calcul du chemin optimal devrait mettre à jour le jeu de valeurs à chaque fois qu'un nouveau chemin possible est trouvé. Cette solution est coûteuse en espace et en opérations.
L'art antérieur connaît déjà, par la publication scientifique « *Shortest-Path and Minimum-Delay Algorithms in Networks with Time-Dépendent Edge-Length* » (A. Orda et R. Rom), une méthode pour résoudre le problème du plus court chemin dans des réseaux dans lesquels le retard (ou poids) des arcs change avec le temps selon des fonctions aléatoires. Le procédé selon la présente invention est différent, dans la mesure où il calcule le plus court chemin pour toutes les sources au même moment.
L'art antérieur connaît également, par la publication scientifique *« An efficient on-line algorithm for the short est mobile path problem »* (Syrotiuk), une méthode pour résoudre le problème du plus court chemin dans des réseaux représentés sous la forme de graphes mobiles.
D'autres procédés pour le calcul de plus court chemin sont décrits dans les publications US 2006/007863 A1 et US 2004/156345 A1.

**Exposé de l'invention**

Pour toute suite admissible de contacts (un chemin ordonné de façon chronologique), l'arrivée le plus tôt (*Earliest Arrival* ou EA) et le départ le plus tard (*Last Departure* ou LD) sont définis. Le procédé selon la présente invention construit les fonctions d'arrivée pour toutes les paires (source, destination), par induction sur les ensembles de contacts, ou arcs du graphe temporel. Les fonctions sont représentées sur la base des ensembles de paires (LD, EA). Pour chaque paire (source, destination), il est possible de représenter tous les chemins optimaux par une liste de paires (LD, EA).
Le processus d'arrivée à chaque instant (fonction d'arrivée) est représenté par une suite de paires temps-valeurs.
La présente invention entend remédier aux inconvénients de l'art antérieur en proposant une méthodologie pour extraire les chemins optimaux d'une façon rapide et efficace.
A cet effet, la présente invention concerne, dans son acception la plus générale, un dispositif de communication dans un réseau de communication comportant au moins deux dispositifs de communication, caractérisé en ce qu'il comporte des moyens pour :

- stocker pour chaque paire (source, destination) de dispositifs du réseau, des chemins sous forme de liste de paires (LD, EA), EA étant l'arrivée le plus tôt : *Earliest Arrival* et LD étant le départ le plus tard : *Last Departure,* pour toute suite de contacts entre dispositifs ; et
- transmettre des données à un autre dispositif par un noeud choisi en utilisant l'historique des chemins précédents observés.

De préférence, ledit réseau de communication est à commutation par paquets, et le dispositif comporte des moyens pour :

- créer, pour les paires (source, destination) dudit réseau, des fonctions qui donnent, à chaque instant, l'instant d'arrivée le plus tôt pour chaque paquet créé ; et

- représenter ces fonctions en se basant sur les ensembles de paires (LD, EA).

Selon une variante, ledit réseau est de type PAN (*Personal Area Network*).

Selon un mode de mise en oeuvre particulier, ledit réseau est de type ad-hoc sans-fil.

Selon un mode de réalisation, ledit réseau est de type Bluetooth.

Selon un autre mode de réalisation, ledit réseau est de type Wi-Fi.

Selon une variante, un dispositif de communication dudit réseau est identifié par une adresse MAC (*Media Access Control).*

La présente invention se rapporte également à un procédé de communication dans un réseau de communication comportant au moins deux dispositifs de communication, caractérisé en ce qu'il comporte les étapes consistant à :

- stocker pour chaque paire (source, destination) de dispositifs du réseau, des chemins sous forme de liste de paires (LD, EA), EA étant l'arrivée le plus tôt : *Earliest Arrival* et LD étant le départ le plus tard : *Last Departure,* pour toute suite de contacts entre dispositifs ; et
- transmettre des données à un autre dispositif par un noeud choisi en utilisant l'historique des chemins précédents observés.

De préférence, ledit réseau de communication est à commutation par paquets, et ledit procédé comporte les étapes consistant à :

- créer, pour les paires (source, destination) dudit réseau, des fonctions qui donnent, à chaque instant, l'instant d'arrivée le plus tôt pour chaque paquet créé ; et
- représenter ces fonctions en se basant sur les ensembles de paires (LD, EA).

## Brève description des dessins

On comprendra mieux l'invention à l'aide de la description, faite ci-après à titre purement explicatif, d'un mode de réalisation de l'invention, en référence aux figures annexées, dans lesquelles :

- la Figure 1 illustre le procédé selon la présente invention ;
- la Figure 2 est un diagramme chronologique qui décrit des chemins optimaux à tout instant, pour une paire (source, destination) donnée ;
- la Figure 3 illustre un exemple de chemins respectant le temps, qui utilisent le même contact, et qui ne peuvent pas être concaténés ; et
- la Figure 4 représente un exemple de scénario pour un réseau mobile.

## Description détaillée des modes de réalisation de l'invention

Le procédé selon la présente invention réduit la mémoire nécessaire pour réaliser un calcul sur de grandes traces, ou un calcul en temps réel.

De plus, le procédé selon la présente invention est la représentation la plus compacte de ces chemins optimaux (2N nombres pour N chemins optimaux). En outre, elle s'adapte automatiquement à deux situations :

- la convention de codage utilisée est bien adaptée pour des chemins simultanés ;
- une très grande hétérogénéité dans la granularité des chemins (beaucoup de chemins en quelques secondes, puis de longues plages de temps sans événement).

Le résultat de l'invention peut être utilisé pour prendre des décisions de transmission pour un terminal mobile.

Une suite d'arcs formant un chemin dans la topologie du graphe est appelée admissible si un chemin respectant le temps peut être défini en utilisant la suite de ces contacts :

$(e_1, e_2..., e_n)$ où $e_i = (v_i, v_{i-1}, t_i^{beg}, t_i^{end})$ est admissible s'il existe une suite non-décroissante d'instants $(t_1,...,t_n)$ telle que $t_i^{beg} \leq t_i \leq t_i^{end}$ .

Par induction, on obtient le fait qu'une condition équivalente est :

$$\forall i, t_i^{end} \geq \max\left\{t_j^{beg}; j < i\right\} \quad . \qquad (1)$$

Les suites admissibles ne peuvent pas toujours être concaténées, même si le dernier contact pour une suite est le premier contact de l'autre. Ceci est dû au fait que des chemins respectant le temps pour la première suite peuvent arriver après que les chemins respectant le temps de la seconde soient déjà partis.

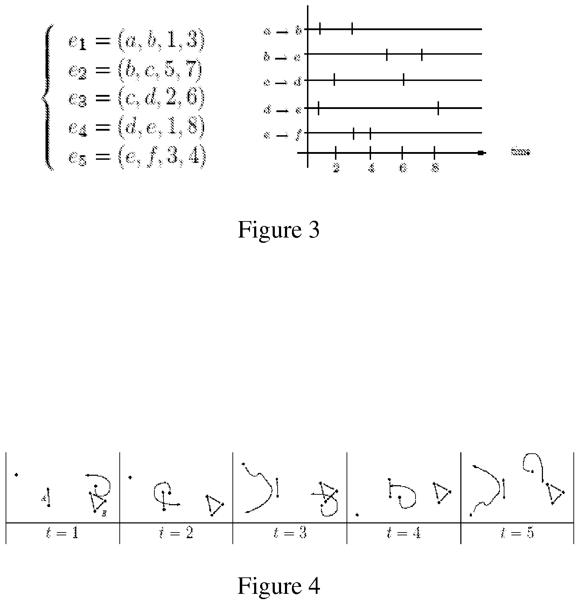

La Figure 3 illustre un exemple de ce cas : la suite $(e_1,e_2,e_3,e_4)$ est admissible, car elle peut être associée avec la suite croissante dans le temps (3,5,5,5). De façon similaire, la suite $(e_4,e_5)$ peut être associée avec la suite de temps (4, 4). Toutefois, $(e_1,e_2,e_3,e_4,e_5)$ n'est pas admissible, car elle ne définit pas de chemins respectant le temps. Sur cette Figure 3, le premier court trait vertical sur chaque ligne horizontale représente le premier contact et le second trait vertical sur chaque ligne horizontale représente la fin du contact.

Pour toute suite admissible de contacts e = $(e_1,e_2,...,e_n)$, nous définissons l'arrivée le plus tôt : EA ou *Earliest*

*Arrival* : $\mathrm{EA}(e) = \max_i \left\{ t_i^{beg} \right\}$. De façon similaire, le départ le plus tard : LD ou *Last Departure* est défini comme

$$\mathrm{LD}(e) = \min_i \left\{ t_i^{end} \right\}.$$

Les faits suivants sont simples à obtenir. Ils montrent que les définitions précédentes permettent de décrire de façon générale une large classe de chemins respectant le temps, et de manipuler une suite admissible.

*(i)* Tous les chemins respectant le temps associés à e quittent la source avant LD(e) et arrivent après EA(e).
*(ii)* Il existe des chemins respectant le temps associés à e qui quittent la source à l'instant LD(e) et qui arrivent à l'instant EA(e).
*(iii)* Deux suites (e), (e') de contacts tels que $v_n = v'_0$ peuvent être concaténés en une suite admissible, $e{\circ}e'$ si et seulement si EA(e) $\leq$ LD(e').

La proposition *(iii)* est une consuite simple et utile de la caractérisation des suites admissibles (1) présentée précédemment. Il est simple de vérifier que EA($e{\circ}e'$) = max(EA(e),EA(e')) et que LD($e{\circ}e'$) = min(LD(e),LD(e')).

Dans *(ii)*, ce n'est pas nécessairement le même chemin qui quitte la source à l'instant LD(e) et qui arrive à l'instant EA(e). Prenons, par exemple, une suite e réalisée avec un unique contact (a -> b pour l'intervalle de temps [$t^{beg}$ ; $t^{end}$] avec $t^{beg} < t^{end}$ Un chemin respectant le temps et utilisant ce contact va de a $\rightarrow$ b à l'instant $t^{beg}$; un chemin différent à l'instant $t^{end}$. Toutefois, lorsque LD(e) $\leq$ EA(e), ce qui est habituellement le cas pour des chemins de type *multi-hop,* on peut construire un chemin quittant à l'instant LD(e) qui arrive à l'instant EA(e). Parmi tous les chemins respectant le temps associés à cette suite, celui-ci est optimal dans le sens où il est plus efficace que les autres, en termes de retard.

Un chemin respectant le temps, laissant le noeud a à l'instant $t_{dep}$, arrivant au noeud b à l'instant $t_{arr}$, est appelé *optimal* s'il n'existe pas d'autre chemin qui est strictement meilleur en terme d'instant de départ/arrivée. En d'autres termes, un autre chemin démarrant après arrive nécessairement plus tard, et un autre chemin arrivant plus tôt doit nécessairement avoir démarré avant :

$$t'_{dep} > t_{dep} \Rightarrow t'_{arr} > t_{arr}$$

et

$$t'_{arr} < t_{arr} \Rightarrow t'_{dep} < t_{dep},$$

où $t'_{dep}$, $t'_{arr}$ correspondent aux temps de départ et d'arrivée d'un autre chemin allant de a à *b.*

Au sein d'un sous-ensemble donné de chemins respectant le temps, un chemin est appelé optimal pour ce sous-ensemble si aucun autre chemin du sous-ensemble n'est strictement meilleur d'après la définition donnée ci-dessus.

Comme exemple, on peut considérer le sous-ensemble de tous les chemins associés à une suite donnée de contacts e. Les chemins optimaux pour ce sous-ensemble sont bien caractérisés une fois que (EA(e),LD(e)) est connu. Si LD(e) $\leq$ EA(e), alors nous pouvons construire un chemin quittant à l'instant LD(e), qui arrive à l'instant EA(e), comme discuté ci-dessus. Il est optimal et tous les chemins optimaux quittent et arrivent nécessairement au même instant exactement.

Si, à l'inverse, nous avons EA(e) < LD(e), cela entraîne à partir des définitions que tous les intervalles associés aux contacts dans e connaissent une intersection sur [EA(e);LD(e)]. Les chemins optimaux qui quittent et arrivent à tout instant t choisi dans cet intervalle commun peuvent alors être construits. Ce sont les seuls.

Introduisons, pour toute source a et destination *b,* la fonction d'arrivée, qui donne l'arrivée le plus tôt d'un message comme fonction du temps où il peut être envoyé par la source. Cette fonction est définie de façon générale par :

$$\texttt{del}(t) \;=\; \min \; \left\{ t_{arr}^{(\pi)} ; t \le t_{dep}^{(\pi)} \right\}$$

où $\pi$ représente tout chemin respectant le temps, qui peut être dessiné entre $a$ et $b$ dans le graphe temporel. Par convention, il est pris comme infini si aucun chemin n'existe. Dans cette définition, le minimum peut être restreint pour inclure seulement les chemins optimaux, sans que cela modifie la valeur de la fonction.

Nous connaissons de façon explicite les caractéristiques des chemins optimaux pour une suite donnée de contacts e, et qu'ils sont donnés par EA(e), LD(e). Nous déduisons de ce qui précède l'expression suivante de la fonction d'arrivée :

$$\texttt{del}(t) = \max(t, \; \min[EA(e) \mid t \le LD(e)]), \qquad (2)$$

où le minimum est pris parmi tous les suites admissibles de contacts, e, conduisant de la source à la destination.

En d'autres termes, nous pouvons décrire toutes les valeurs et les discontinuités de la fonction d'arrivée sur la base des suites admissibles de contacts, qui sont directement construites dans le graphe temporel. De plus, cette fonction dépend seulement des couples (EA,LD) associés à toutes ces suites.

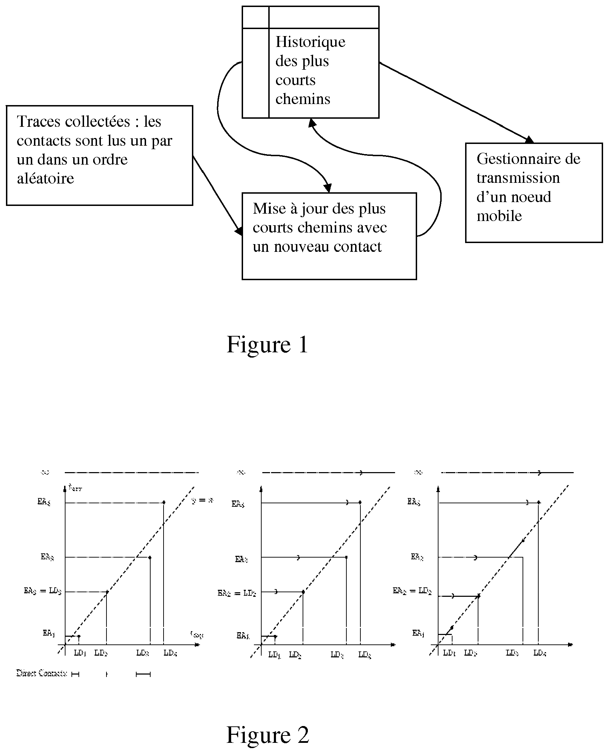

La fonction d'arrivée et sa représentation par suite de paires, est illustrée Figure 2. Le temps $t$ est représenté sur l'axe des x et la valeur de la fonction d'arrivée, qui peut être infinie est représentée sur l'axe des y. Ce schéma est appelé diagramme chronologique. Le schéma de gauche montre les points avec des coordonnées associées aux paires, celui du milieu présente la valeur prise par le minimum dans (2) et sur la droite, la fonction d'arrivée est représentée. Trois cas complémentaires sont représentés : les paires 1 et 3 correspondent à un intervalle de connectivité simultanée entre la source et la destination ; la paire 2 représente un cas similaire, où le contact dure seulement un intervalle de temps ; la paire 4 ne correspond pas à une connectivité simultanée, car les données ont besoin de quitter la source, rester pendant un moment dans un relais avant d'être délivrées. Des cas similaires sont rencontrés dans la pratique.

Dans les algorithmes présentés, la fonction d'arrivée est toujours représentée, pas directement comme une fonction, mais en utilisant sa suite associée de paires (LD,EA). Selon cette représentation, une collection vide correspond naturellement à une paire source-destination pour laquelle aucun chemin n'existe, et la fonction d'arrivée est constante de valeur toujours infinie.

Le procédé selon la présente invention traite et représente de façon efficace la performance de tous les chemins optimaux dans un graphe temporel, pour toutes les paires source-destination, à tout instant de départ. Ces chemins optimaux correspondent au meilleur choix possible de transmission, basé sur des contacts opportunistes dans un réseau mobile. Comme le fait d'étudier seulement les chemins optimaux peut être trop restrictif, nous montrons que le même procédé permet d'identifier tous les chemins optimaux à l'intérieur de certaines classes. La notion d'optimalité peut ainsi être paramétrisée.

Le procédé selon la présente invention construit les fonctions d'arrivée pour toutes les paires source-destination, par induction sur l'ensemble de contacts, ou arcs du graphe temporel. Les fonctions seront représentées sur la base d'ensemble de paires (LD, EA).

Deux remarques s'appliquent à chaque paire source-destination :

- Beaucoup de paires (LD, EA) associées avec des suites admissibles ne sont pas nécessaires pour caractériser la fonction d'arrivée donnée par (2). La fonction pourrait être entièrement caractérisée par un petit nombre de paires, qui est égal au nombre de discontinuités et au nombre de chemins optimaux pour cette paire source destination.

- Si l'ensemble de paires est organisé sous forme d'une liste, qui est triée selon la première coordonnée, on peut mettre à jour de façon efficace cette liste pour inclure une autre paire (LD, EA) qui capture l'effet d'une autre suite de contacts.

Sur la base de ces techniques, deux algorithmes ont été développés :

1) Recherche non contrainte :

Afin de capturer l'effet de tous les chemins optimaux, les contacts dans le graphe temporel sont ajoutés l'un après l'autre. Nous démarrons à partir de collections vides et d'un ensemble de contacts vide, nous mettons à jour pour chaque étape les collections représentant les fonctions d'arrivée pour le sous-graphe étendu. Quand un contact, une arc a -> b dans le graphe temporel, est ajouté, la paire associée (LD, EA) est tout d'abord incluse dans la collection correspondant à la source a et à la destination b. Pour représenter tous les chemins qui peuvent passer par cette arc en un nouveau chemin optimal, nous examinons toutes les collections avec une source s et une destination a, et les collections avec une source b et toutes les destinations d. Nous n'avons pas besoin de considérer toutes les paires (LD, EA) dans ces collections. Certaines d'entre elles ne peuvent pas être complétées avec la nouvelle arc en une suite admissible, selon la règle de concaténation précédemment présentée ;

d'autres ne conduisent pas à la définition de nouveaux chemins optimaux.

Toutes ces opérations (concaténation, optimalité, inclusion à une fonction d'arrivée existante) peuvent être décidées sur la base des valeurs des paires (LD, EA) associées. Après que tous ces contacts ont été inclus, nous obtenons, la meilleure fonction d'arrivée, qui décrit en particulier les caractéristiques du retard du chemin optimal vu à tout instant.

2) Recherche avec des bonds (« *hops* ») limités :

Dans cet algorithme, nous itérons une concaténation unique vers la droite de tous les contacts avec le même ensemble de référence fixé. Nous démarrons avec un ensemble vide, de sorte que la première itération produit tous les chemins optimaux avec une taille 1 (comme chaque contact directe entre deux terminaux est en effet un chemin optimal). Dans l'étape suivante, nous considérons l'ensemble de ces chemins comme le nouvel ensemble de référence, et chaque contact est concaténé à nouveau avec cet ensemble, sans le modifier. Les résultats sont joints ensemble pour obtenir tous les chemins optimaux avec une taille au moins deux. Conserver le premier jeu de chemins en mémoire n'est ensuite pas nécessaire pour les étapes suivantes.

Le dispositif de communication selon la présente invention est typiquement un terminal mobile comportant un processeur, une mémoire et des moyens de communication avec d'autres dispositifs de communication.

Le procédé distribué selon la présente invention calcule *a posteriori* les chemins présentant un retard optimal de chaque source vers chaque destination.

Dans un mode de réalisation, ce procédé comporte deux composantes :

- un routage en arrière (*backward-routing)* qui est un calcul exact des informations concernant des chemins à retard optimal jusqu'à maintenant ; et
- une transmission basée sur un historique, qui est un mécanisme chargé d'extraire des informations du passé pour prendre une décision de transmission.

**Routage en arrière** (*backward-routing)* :

Dans cette partie, un état courant du réseau en termes d'opportunités passées de toutes les sources vers lui-même est maintenu.

Chaque noeud du réseau maintient dans une table de routage en arrière (*backward-routing table),* le dernier chemin à retard optimal de toutes les sources s vers lui-même : ce chemin est défini comme celui qui permet à un paquet de partir au dernier instant possible de s et d'arriver au noeud avant l'instant courant $t$.

Toutes les tables sont initialement vides. Lorsque deux noeuds arrivent en contact, ils échangent le contenu de leurs tables de façon à mettre à jour les états pour représenter ce contact. Ceci permet également à chaque noeud d'être informé de la présence des autres sources.

Il peut sembler excessif de capturer les informations concernant toutes les sources du réseau, car un noeud pourrait ne pas être particulièrement intéressé par un autre noeud. Toutefois, effectuer une sélection par noeud aura un impact sur le chemin depuis une source vers cette destination particulière, et cela supprimerait également tous les chemins qui pourraient utiliser cette destination comme relais pour échanger des données.

Lorsque deux noeuds se rencontrent de façon répétée, il est possible d'éviter l'échange d'entrées redondantes.

**Transmission basée sur l'historique** (*history-based forwarding)* :

Dans un premier temps, des informations sont extraites d'un état en constante évolution des tables de routage en arrière : des statistiques peuvent être collectées au sujet de qui a été un relais pour des chemins à retard optimal.

Dans un second temps, les informations sont utilisées pour effectuer la transmission de paquets de données.

La Figure 4 représente un scénario avec sept noeuds. Cinq noeuds sont statiques pendant cette période : ils sont distribués dans deux clusters A et B contenant respectivement deux et trois noeuds. Deux noeuds sont en mouvement dans différentes régions. L'un des deux, en particulier, entre en contact avec les deux clusters statiques à plusieurs instants différents.

L'étape de « routage en arrière » présentée ci-dessus fonctionne comme suit dans cet exemple :

A l'instant $t$ = 1, les tables de routage en arrière contiennent seulement les noeuds statiques et les noeuds mobiles contiennent les chemins à partir de tous les noeuds du cluster $B$.

A l'instant $t$ = 2, les noeuds mobiles au milieu entrent en contact avec l'autre cluster. Il transmet ainsi par transitivité un chemin à retard optimal à partir de tous les noeuds dans le cluster $B$ vers tous les noeuds dans le cluster A. Ceci est immédiatement reflété par le noeud dans le cluster $A$.

A l'instant $t$ = 3, les noeuds mobiles en contact avec $B$ mettent à jour tous leurs chemins au départ de ce cluster, et créent de nouveaux chemins à partir de tous les noeuds du cluster $A$ à l'instant $t$ = 2, vers les noeuds du cluster $B$. De plus, le noeud le plus à gauche entre en contact avec les noeuds du cluster $A$ : il hérite des chemins de tout le cluster A avec un instant de départ égal à $t$ = 3, et des chemins de cluster $B$ avec un instant de départ $t$ = 1.

A l'instant $t$ = 4, le noeud mobile répète un second contact dans $A$. Il met à jour tous les chemins et obtient pour la première fois une entrée correspondant au noeud mobile le plus à gauche.

A l'instant $t$ = 5, chaque noeud mobile entre en contact avec un cluster, en particulier le cluster $B$. Ce cluster comporte pour la première fois un chemin initié à partir du noeud mobile le plus à gauche.

A ce moment-là, le réseau est connecté, c'est-à-dire qu'un chemin a été trouvé pour toutes les paires (source, destination).

Certaines opérations basées sur l'historique peuvent rendre la transmission plus efficace.

Si un paquet créé au niveau du noeud mobile le plus à gauche doit être envoyé au cluster $B$, il peut décider, en se basant sur le contact effectué à l'instant $t$ = 3, de laisser une copie dans le cluster $A$, car il a vu pour la première fois un chemin de $B$ vers lui-même, passant à travers $A$. En fait, en suivant la même règle, les noeuds du cluster $A$ donnent le paquet au noeud mobile au milieu à l'instant $t$ = 4, qui ensuite le donne à destination à l'instant $t$ = 5.

Très rapidement, les noeuds des deux clusters peuvent identifier que le noeud mobile au milieu est une bonne option pour la transmission de paquets dans l'autre cluster.

**Format de la table de routage en arrière** (*backward-routing table*)

Deux champs sont nécessaires pour chaque entrée : la source (identifiée par l'adresse MAC ou bien par une autre signature unique), et l'instant qui a été identifié comme le dernier départ depuis cette source. Ces informations sont suffisantes pour maintenir la table à jour, mais cela ne permet pas de sélectionner un ou plusieurs relais particuliers, car seule la distance (ou retard du chemin optimal) entre chaque source et un noeud est décrite.

Un autre champ peut être ajouté. Il peut contenir, par exemple :

- l'identité du dernier transmetteur ;
- la liste complète de relais dans un chemin ;
- l'instant où le chemin a été enregistré (correspondant au dernier contact utilisé par ce chemin) ;
- la liste des relais utilisés et le temps de transition entre eux, pour ce chemin.

Un exemple de table est fourni dans le tableau suivant :

Tableau 1 : exemple d'une table de routage en arrière.

| Sources | Dernier départ | Description des chemins (facultatif) |
|---|---|---|
| 1 | 1 | Par 5, à l'instant 3, information collectée à l'instant 3 |
| ... | ... | ... |
| N | 6 | Par N, à l'instant 6 |

La table est initialement vide. Lorsque *i et j* se rencontrent, ils initialisent ou mettent à jour l'entrée relative l'un à l'autre dans un premier temps.

Tableau 2.

| Sources | Dernier Départ | Chemins |
|---|---|---|
| i | t | Via i à t |

Dans un second temps, ils échangent leurs tables de routage en arrière courantes. Lorsqu'un noeud reçoit une nouvelle entrée, pour une source s et un dernier départ *t'* :

- s'il n'a pas d'entrée pour cette source, il l'ajoute à sa table ;
- s'il a déjà une entrée pour cette source, il compare l'instant du dernier départ et la met à jour avec la plus grande valeur.

Lorsqu'une entrée est initialisée ou mise à jour, les informations au sujet du chemin utilisée sont concaténées avec celles reçues.

Il est possible de restreindre le nombre d'entrées échangées, par exemple en ne renvoyant pas certaines entrées.

L'invention est décrite dans ce qui précède à titre d'exemple. Il est entendu que l'homme du métier est à même de réaliser différentes variantes de l'invention sans pour autant sortir du cadre du brevet.

**Revendications**

1. Dispositif de communication dans un réseau de communication comportant au moins deux dispositifs de communication, le dispositif comporte :

   - des moyens de stockage, pour chaque paire de dispositifs de communication source et destination dudit réseau de communication, de suites de contacts chronologiquement ordonnées entre paires de dispositifs de communication liant le dispositif de communication source et le dispositif de communication de destination, appelées chemins, sous forme de listes de paires (LD, EA), où EA est un instant d'arrivée au plus tôt à un premier dispositif de communication et LD est un instant de départ au plus tard d'un second dispositif de communication pour toute suite de contacts, de sorte que pour chacun desdits chemins desdits dispositifs de communication source auxdits dispositifs de communication de destination, l'instant de départ au plus tard associé à chacun desdits chemins correspond au dernier instant pour lequel un chemin peut commencer et l'instant d'arrivée au plus tôt associé à chacun desdits chemins correspond au premier instant pour lequel un chemin peut se terminer,
   - des moyens de maintien, pour chaque noeud du réseau, d'une table de routage en arrière contenant des informations sur des chemins précédents observés provenant de tous les dispositifs de communication sources dans le réseau vers ledit noeud ; et
   - des moyens de transmission de données à un autre dispositif de communication par un noeud choisi en utilisant un historique des chemins précédents observés extraits des tables de routage en arrière.

2. Dispositif de communication selon la revendication 1, **caractérisé en ce que** ledit réseau de communication est à commutation par paquets, et **en ce que** ledit dispositif de communication comporte :

   - des moyens de création, pour les paires source et destination dudit réseau de communication, de fonctions qui donnent, à chaque instant, un instant d'arrivée au plus tôt pour chaque paquet créé ; et
   - des moyens de représentation de ces fonctions en se basant sur les listes des paires (LD, EA).

3. Dispositif de communication selon la revendication 1 ou 2 **caractérisé en ce que** ledit réseau est de type PAN (*Personal Area Network).*

4. Dispositif de communication selon la revendication 3 **caractérisé en ce que** ledit réseau est de type Bluetooth.

5. Dispositif de communication selon la revendication 1 ou 2 **caractérisé en ce que** ledit réseau est de type ad-hoc sans-fil.

6. Dispositif de communication selon la revendication 1 ou 2 **caractérisé en ce que** ledit réseau est de type Wi-Fi.

7. Dispositif de communication selon l'une quelconque des revendications précédents **caractérisé en ce qu'**un dispositif de communication dudit réseau est identifié par une adresse MAC *(Media Access Control*).

8. Procédé de communication dans un réseau de communication comportant au moins deux dispositifs de communication, le procédé comporte les étapes consistant à :

   - stocker pour chaque paire de dispositifs de communication source et destination dudit réseau de communication, des suites de contacts chronologiquement ordonnées entre paires de dispositifs de communication liant le dispositif de communication source et le dispositif de communication de destination, appelées chemins, sous forme de listes de paires (LD, EA), où EA est un instant d'arrivée au plus tôt à un premier dispositif de communication et LD est un instant de départ au plus tard d'un second dispositif de communication, pour toute suite de contacts, de sorte que pour chacun desdits chemins desdits dispositifs de communication source auxdits dispositifs de communication de destination, l'instant de départ au plus tard associé à chacun desdits chemins correspond au dernier instant pour lequel un chemin peut commencer et l'instant d'arrivée au plus tôt associé à chacun desdits chemins correspond au premier instant pour lequel un chemin peut se terminer,

- maintenir, pour chaque noeud du réseau, une table de routage en arrière contenant des informations sur des chemins précédents observés provenant de tous les dispositifs de communication sources dans le réseau vers ledit noeud ; et
- transmettre des données à un autre dispositif par un noeud choisi en utilisant un historique des chemins précédents observés extraits des tables de routage en arrière.

9. Procédé de communication selon la revendication 8 **caractérisé en ce que** ledit réseau de communication est à commutation par paquets, **en ce qu'**il comporte les étapes consistant à :

- créer, pour les paires source et destination dudit réseau de communication, des fonctions qui donnent, à chaque instant, un instant d'arrivée au plus tôt pour chaque paquet créé ; et
- représenter ces fonctions en se basant sur les listes de paires (LD, EA).

**Patentansprüche**

1. Kommunikationsvorrichtung in einem Kommunikationsnetzwerk, bestehend aus mindestens zwei Kommunikationsvorrichtungen, wobei die Vorrichtung umfasst:

- Speichermedien, für jedes Kommunikationsvorrichtungspaar aus Quelle und Zielort des besagten Kommunikationsnetzwerks, von chronologisch geordneten Kontaktfolgen zwischen Kommunikationsvorrichtungen, die das Kommunikationsmittel Quelle und das Kommunikationsmittel Zielort verbinden, Pfade genannt, in Form von Listen von Paaren (LD, EA), wobei EA ein frühester Ankunftszeitpunkt an einer ersten Kommunikationsvorrichtung und LD ein spätester Startzeitpunkt an einer zweiten Kommunikationsvorrichtung für jede Kontaktfolge ist, dergestalt, dass für jeden der besagten Pfade von den besagten Kommunikationsvorrichtungen Quelle zu den Kommunikationsvorrichtungen Zielort der mit jedem der Pfade verknüpfte späteste Startzeitpunkt dem letzten Zeitpunkt entspricht, für welchen ein Pfad beginnen kann, und der mit jedem der Pfade verknüpfte früheste Ankunftszeitpunkt dem ersten Zeitpunkt entspricht, für welchen ein Pfad enden kann,
- Mittel zum Aufrechterhalten, für jeden Knoten des Netzwerks, einer Routingtabelle im Hintergrund, die Informationen zu beobachteten vorherigen Pfaden enthält, die aus allen Quellen-Kommunikationsvorrichtungen im Netzwerk hin zu besagtem Knoten stammen; und
- Mittel zur Übertragung von Daten an eine andere Kommunikationsvorrichtung durch einen gewählten Knoten, indem eine Chronik der beobachteten vorherigen Pfade verwendet wird, die den Routingtabellen im Hintergrund entnommen werden.

2. Kommunikationsvorrichtung gemäß Anspruch 1, **dadurch gekennzeichnet, dass** das besagte Kommunikationsnetzwerk ein Netzwerk durch Paketvermittlung ist, und dadurch, dass die besagte Kommunikationsvorrichtung besteht aus:

- Mitteln zur Erzeugung, für die Paare Quelle und Zielort des besagten Kommunikationsnetzwerks, von Funktionen, die zu jedem Zeitpunkt einen frühesten Ankunftszeitpunkt für jedes erzeugte Paket geben; und
- Mittel zur Darstellung dieser Funktionen auf der Grundlage der Listen der Paare (LD, EA).

3. Kommunikationsvorrichtung nach Anspruch 1 oder 2, **dadurch gekennzeichnet, dass** das besagte Netzwerk vom Typ PAN (*Personal Area Network*) ist.

4. Kommunikationsvorrichtung nach Anspruch 3, **dadurch gekennzeichnet, dass** das besagte Netzwerk vom Typ Bluetooth ist.

5. Kommunikationsvorrichtung nach Anspruch 1 oder 2, **dadurch gekennzeichnet, dass** das besagte Netzwerk vom Typ drahtloses Ad-hoc-Netzwerk ist.

6. Kommunikationsvorrichtung nach Anspruch 1 oder 2, **dadurch gekennzeichnet, dass** das besagte Netzwerk vom Typ WLAN ist.

7. Kommunikationsvorrichtung nach einem der vorhergehenden Ansprüche, **dadurch gekennzeichnet, dass** eine Kommunikationsvorrichtung des besagten Netzwerks durch eine MAC-Adresse (*Media Access Control)* identifiziert wird.

8. Kommunikationsverfahren in einem Kommunikationsnetzwerk, das mindestens zwei Kommunikationsvorrichtungen umfasst, wobei das Verfahren zwei Etappen umfasst, bestehend aus:

- Speicherung, für jedes Kommunikationsvorrichtungspaar aus Quelle und Zielort des besagten Kommunikationsnetzwerkes, der chronologisch geordneten Kontaktfolgen zwischen Paaren von Kommunikationsvorrichtungen, die die Kommunikationsvorrichtung Quelle und die Kommunikationsvorrichtung Zielort verbinden, Pfade genannt, in Form von Listen von Paaren (LD, EA), wobei EA ein frühester Ankunftszeitpunkt an einer ersten Kommunikationsvorrichtung und LD ein spätester Startzeitpunkt an einer zweiten Kommunikationsvorrichtung für jede Kontaktfolge ist, dergestalt, dass für jeden der besagten Pfade von den besagten Kommunikationsvorrichtungen Quelle zu den Kommunikationsvorrichtungen Zielort der mit jedem der besagten Pfade verknüpfte späteste Startzeitpunkt dem letzten Zeitpunkt entspricht, für welchen ein Pfad beginnen kann, und der mit jedem der besagten Pfade verknüpfte früheste Ankunftszeitraum dem ersten Zeitpunkt entspricht, für welchen ein Pfad enden kann,
- Aufrechterhaltung für jeden Knoten des Netzwerkes einer Routingtabelle im Hintergrund, die Informationen über beobachtete vorherige Pfade enthält, die aus allen Quellen-Kommunikationsvorrichtungen im Netzwerk hin zu dem besagten Knoten stammen; und
- Übertragung der Daten an eine andere Vorrichtung durch einen gewählten Knoten, indem eine Chronik der beobachteten vorherigen Pfade verwendet wird, die den Routingtabellen im Hintergrund entnommen werden.

9. Kommunikationsverfahren nach Anspruch 8, **dadurch gekennzeichnet, dass** das besagte Kommunikationsnetzwerk ein Netzwerk durch Paketvermittlung ist, dadurch, dass es die Etappen umfasst, bestehend aus:

- Erzeugung, für die Paare Quelle und Zielort des besagten Kommunikationsnetzwerkes, von Funktionen, die zu jedem Zeitpunkt einen frühesten Ankunftszeitpunkt für jedes erzeugte Paket geben; und
- Darstellung dieser Funktionen auf der Grundlage der Listen der Paare (LD, EA).

**Claims**

1. Communication device in a communication network comprising at least two communication devices, the device comprises:

- means for storing, for each source and destination communication device pair of said communication network, series of contacts chronologically ordered between communication device pairs connecting the source communication device and the destination communication device, called paths, in the form of pair lists (LD, EA), where EA is an earliest arrival time to a first communication device and LD is a latest departure time from a second communication device for any series of contacts, so that for each of said paths from said source communication devices to said destination communication devices, the latest departure time associated with each one of said paths corresponds to the last time for which a path can start and the earliest arrival time associated with each one of said paths corresponds to the first time for which a path can end,
- means for maintaining, for each network node, a backward routing table containing information on observed previous paths from all the source communication devices in the network toward said node; and
- means for transmitting data to another communication device via a node selected by using a history of observed previous paths extracted from the backward routing tables.

2. Communication device according to claim 1, **characterized in that** said communication network is packet switching, and **in that** said communication device comprises:

- means for creating, for the source and destination pairs of said communication network, functions that provide, at each time, an earliest arrival time for each created packet; and
- means of representation of these functions based on the pair lists (LD, EA).

**3.** Communication device according to claim 1 or 2, **characterized in that** said network is a PAN (Personal Area Network) type network.

**4.** Communication device according to claim 3, **characterized in that** said network is of the Bluetooth type.

**5.** Communication device according to claim 1 or 2, **characterized in that** said network is of the wireless ad-hoc type.

**6.** Communication device according to claim 1 or 2, **characterized in that** said network is of the Wi-Fi type.

**7.** Communication device according to any one of the preceding claims, **characterized in that** a communication device of said network is identified by a MAC (Media Access Control) address.

**8.** Communication method in a communication network comprising at least two communication devices, the method comprises the stages consisting in:

- storing for each source and destination communication device pair of said communication network, chronologically ordered contact sequences between communication device pairs connecting the source communication device and the destination communication device, called paths, in the form of pair lists (LD, EA), where EA is an earliest arrival time to a first communication device and LD is a latest departure time from a second communication device, for any series of contacts, so that for each one of said paths from said source communication devices to said destination communication devices, the latest departure time associated with each one of said paths corresponds to the last time for which a path can start and the earliest arrival time associated with each one of said paths corresponds to the first time for which a path can end,
- maintaining, for each network node, a backward routing table containing information on observed previous paths from all the source communication devices of the network toward said node; and
- transmitting the data to another device by a node selected using a history of observed previous paths extracted from the backward routing table.

**9.** Communication method according to claim 8, **characterized in that** said communication network is packet switching, **in that** it comprises the stages consisting in:

- creating, for the source and destination pairs of said network, functions that provide, at each time, an earliest arrival time for each created packet; and
- representing these functions based on the pair lists (LD, EA).

Historique
des plus
courts
chemins

Traces collectées : les
contacts sont lus un par
un dans un ordre
aléatoire

Gestionnaire de
transmission
d'un noeud
mobile

Mise à jour des plus
courts chemins avec
un nouveau contact

Figure 1

Figure 2

$$\begin{cases} e_1 = (a, b, 1, 3) \\ e_2 = (b, c, 5, 7) \\ e_3 = (c, d, 2, 6) \\ e_4 = (d, e, 1, 8) \\ e_5 = (e, f, 3, 4) \end{cases}$$

## Figure 3

## Figure 4

**EP 2 020 127 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2006007863 A1
- US 2004156345 A1